# EUROPÄISCHE PATENTANMELDUNG

(11) **EP 4 012 376 A1**
(43) Veröffentlichungstag der Anmeldung: **15.06.2022**
(21) Anmeldenummer: 21209885.9
(22) Anmeldetag: 23.11.2021
(51) Int. Cl.: G01N 15/00, G01N 15/02, G01N 15/06, G01N 15/14

(54) **VORRICHTUNG UND VERFAHREN ZUR ERFASSUNG EINER KONZENTRATION VON VORBESTIMMTEN PARTIKELN ANHAND IHRER MORPHOLOGISCHEN EIGENSCHAFTEN IN LUFT**

(30) Priorität: 08.12.2020 DE 102020132574
(71) Anmelder: ebm-papst neo GmbH & Co. KG, 74673 Mulfingen (DE); Xares Innovative Solutions GmbH, 74632 Neuenstein (DE)
(72) Erfinder: WYSTUP, Ralph, 74653 Künzelsau (DE); WYSTUP, Frederik, 74632 Neuenstein (DE)
(74) Vertreter: Staeger & Sperling Partnerschaftsgesellschaft mbB

(57) **Zusammenfassung**

Die Erfindung betrifft eine Vorrichtung (1) zur Erfassung einer Konzentration von vorbestimmten Partikeln, insbesondere Viren, in Luft (3), welche organische und/oder anorganische Aerosolpartikel umfasst, wobei die Vorrichtung (1) eine Bereitstellungseinheit (10) zum Binden der Aerosolpartikel als Partikel in einem Fluid (4), eine Abbildungseinheit (20) zum Erzeugen einer vergrößerten Abbildung der in dem Fluid (4) enthaltenen Partikel, eine Bilderfassungseinheit (40) zum Erfassen und Übermitteln der Abbildung und eine Auswerteeinheit (50) zur Auswertung der in der Abbildung abgebildeten Partikel aufweist, wobei die Auswerteeinheit (50) ausgebildet ist, automatisch morphologische Eigenschaften der in der Abbildung abgebildeten Partikel zu erfassen, die erfassten morphologischen Eigenschaften mit morphologischen Eigenschaften der vorbestimmten Partikel zu vergleichen und durch den Vergleich einen Anteil von vorbestimmten Partikeln in der Abbildung und die Konzentration der vorbestimmten Partikel in der Luft (3) zu bestimmen.

## Beschreibung

Die Erfindung betrifft eine Vorrichtung und ein zugehöriges Verfahren zur Erfassung einer Konzentration von vorbestimmten Partikeln und insbesondere Viren in Luft anhand ihrer morphologischen Eigenschaften und insbesondere ihrem Aussehen bzw. ihrer äußeren Erscheinung.

Es gibt eine Vielzahl von Krankheiten bzw. Krankheitserregern und insbesondere krankheitsauslösenden Viren, welche sich über die Luft und insbesondere über Aerosole verbreiten und in der Luft somit als Aerosolpartikel vorliegen. Daher ist es wünschenswert, solche Viren in der Luft detektieren sowie ihre Konzentration in der Luft und dadurch eine eventuelle Ansteckungsgefahr bestimmen zu können.

Im Stand der Technik sind zwar grundsätzlich sehr exakte Methoden zur Bestimmung der Konzentration von Viren in der Luft bekannt, diese basieren jedoch überwiegend auf Laborverfahren mit entsprechend langwierigen Analysen, so dass die bekannten Verfahren aufwendig, teuer und vor allem auch zeitintensiv sind. Die Vorrichtungen zur Durchführung der bekannten Methoden können daher nicht für eine kurzfristige Warnung vor Krankheitserregern genutzt werden, da die Analyseergebnisse meist schlicht zu spät vorliegen würden.

Zudem sind die bekannten Verfahren meist auf einen einzelnen ganz bestimmten Virus oder allgemein auf einen einzelnen bestimmten Krankheitserreger abgestimmt und oftmals nicht für andere Krankheitserreger anwendbar, so dass mit solchen Verfahren nicht die Konzentration bzw. das Vorhandensein verschiedenster Krankheitserreger in der Luft bestimmt werden kann.

Für eine erste Einschätzung, ob Krankheitserreger in der Luft vorhanden sind, sowie eine Einschätzung der Gefahr, welche von den potentiell vorhandenen Krankheitserregern ausgeht, ist es zunächst oftmals nicht zwingend nötig zu wissen, um welche Krankheitserreger oder Viren es sich genau handelt, sondern nur, dass solche Krankheitserreger mit einer gewissen Wahrscheinlichkeit und mit bzw. in einer gewissen Konzentration vorhanden sind. Hierfür schlagen beispielsweise die bisher unveröffentlichten deutschen Patentanmeldungen mit den Anmeldenummern 10 2020 120 199.0 und 10 2020 124 740.0 verschiedene Lösungen vor, durch welche das Vorhandensein von Partikeln mit einer bestimmten Partikelgröße ermittelt werden kann, bei welchen es sich mit überwiegender Wahrscheinlichkeit um bestimmte Krankheitserreger handelt.

Es ist zu beachten, dass ein Aerosol ein heterogenes Gemisch (Dispersion) aus festen und/oder flüssigen Schwebeteilchen in einem Gas, z.B. Luft ist. Die Schwebeteilchen werden Aerosolpartikel genannt, wobei solche Aerosolpartikel beispielsweise Staub, Pollen, Sporen, Bakterien oder Viren sein können, so dass eine einfache Messung der Aerosolpartikel und somit eine Abschätzung, ob Krankheitserreger vorhanden sind, nicht ohne Weiteres möglich ist.

Insbesondere bei einer Ermittlung der Konzentration von Partikeln in der Luft anhand der Größe der Partikel kann es daher dazu kommen, dass Partikel in die Bestimmung der Konzentration mit einbezogen werden, welche zufällig eine ähnliche Größe aufweisen und welche nicht dem gesuchten Krankheitserreger entsprechen, so dass die ermittelte Konzentration fehlerhaft ist.

Der Erfindung liegt deshalb die Aufgabe zugrunde, die vorgenannten Nachteile zu überwinden und eine Vorrichtung sowie ein zugehöriges Verfahren bereitzustellen, durch welche die Konzentration bestimmter Partikel und insbesondere bestimmter Viren in der Luft schnell und mit hoher Genauigkeit bestimmbar ist.

Diese Aufgabe wird durch die Merkmalskombination gemäß Patentanspruch 1 gelöst.

Erfindungsgemäß wird daher eine Vorrichtung zur Erfassung einer Konzentration von vorbestimmten Partikeln, insbesondere Viren, in Luft vorgeschlagen. Dabei umfasst die Luft organische und/oder anorganische Aerosolpartikel. Die Vorrichtung weist eine Bereitstellungseinheit, eine Abbildungseinheit, eine Bilderfassungseinheit sowie eine Auswerteeinheit auf. Die Bereitstellungseinheit ist ausgebildet, die in der Luft enthaltenen Aerosolpartikel in einem Fluid zu binden, so dass das Fluid die zuvor in der Luft enthaltenen Aerosolpartikel als Partikel enthält. Bei dem Fluid handelt es sich vorzugsweise um eine Flüssigkeit, wobei das Fluid auch ein Gasgemisch sein kann. Weiter ist vorgesehen, dass die Bereitstellungseinheit ausgebildet ist, einem stetigen oder gleichmäßig getakteten Fluidstrom entlang eines vorbestimmten Strömungspfades bereitzustellen, wobei der Fluidstrom, sowohl bei einer stetigen als auch getakteten Bereitstellung, kontinuierlich entlang dem Strömungspfad förderbar ist. Vorzugsweise ist die Bereitstellungseinheit bezüglich des Strömungspfades strömungstechnisch mit der Abbildungseinheit verbunden, so dass das Fluid bzw. die Flüssigkeit entlang des Strömungspfades von der Bereitstellungseinheit in sowie durch die Abbildungseinheit fließen kann. Die Abbildungseinheit weist einen entsprechend stetig oder getaktet von dem Fluidstrom durchströmbaren Probenkanal auf, welcher den vorbestimmten Strömungspfad innerhalb der Abbildungseinheit bestimmt. Ferner ist die Abbildungseinheit ausgebildet, eine vergrößerte Abbildung der Partikel zu erzeugen, welche in dem den Probenkanal durchströmenden Fluid enthalten sind. Sowohl bei einer stetigen als auch bei einer getakteten Förderung befindet sich jeweils ein die Partikel umfassendes Fluid in der Abbildungseinheit, so dass durch die Vergrößerung der Partikel eine "In-situ-Messung" bzw. "In-situ-Analyse", durchgeführt werden kann, bei welchem sich also die Probe, welche durch das durch den Probenkanal strömenden Fluid gebildet wird, fortlaufend ändern kann. Insbesondere ist es also nicht nötig, die Probe, einen Probenträger oder sonstige Bestandteile der Vorrichtung von Hand auszutauschen oder anzupassen. Um eine schnelle und automatische Analyse bzw. Auswertung der durch die Abbildungseinheit erhaltenen Abbildungen zu ermöglichen, ist die Bilderfassungseinheit ausgebildet, die Abbildung insbesondere bildtechnisch zu erfassen und die Abbildung in ihrer erfassten Form an die Auswerteeinheit zu übermitteln. Entsprechend ist die Auswerteeinheit ausgebildet, automatisch morphologische Eigenschaften der in der Abbildung abgebildeten Partikel zu erfassen, die erfassten morphologischen Eigenschaften mit morphologischen Eigenschaften der vorbestimmten Partikel zu vergleichen und durch den Vergleich einen Anteil von vorbestimmten Partikeln in der Abbildung und die Konzentration der vorbestimmten Partikel in der Luft zu bestimmen. Als morphologische Eigenschaften wird insbesondere das Aussehen der Partikel bzw. der Viren verstanden, so dass die vorbestimmten Partikel von anderen Partikeln anhand ihres Äußeren unterscheidbar sind bzw. unterschieden werden. Als Konzentration kann beispielsweise die Anzahl der vorbestimmten Partikel pro vorbestimmten Luftvolumen, also beispielsweise pro Kubikmeter angegeben werden.

Anhand der Konzentration der vorbestimmten Partikel (Viren) in der Probe bzw. in dem Fluid und der daraus bestimmten Konzentration der vorbestimmten Partikel (Viren) in der Luft, aus welcher die Probe gewonnen wurde, kann durch die Auswerteeinheit zudem bestimmt werden, ob grundsätzlich bestimmte Partikel (Viren) vorhanden sind, wie hoch eine Ansteckungsgefahr ist und ob die Ansteckungsgefahr einen vorbestimmten Schwellwert überschreitet.

Neben der Konzentration der vorbestimmten Partikel können auch Konzentrationen anderer Partikel erfasst werden. Beispielsweise können auch mehrere vorbestimmte Partikel vorgesehen sein, bei welchem ein erster vorbestimmter Partikel beispielsweise einem ersten Virus oder ersten Krankheitserreger entspricht und ein zweiter vorbestimmter Partikel beispielsweise einem zweiten Virus oder zweiten Krankheitserreger entspricht, so dass mittels der Auswerteeinheit ermittelt werden kann, welche Konzentrationen des ersten vorbestimmten Partikels und des zweiten vorbestimmten Partikels vorliegen. Hierfür sind dann entsprechend die morphologischen Eigenschaften beider bzw. bei mehreren vorbestimmten Partikeln aller vorbestimmten Partikel vorbekannt und in der Auswerteeinheit hinterlegt. Neben Krankheitserregern oder dergleichen kann durch die Auswerteeinheit auch beispielsweise die Konzentration von Staub in der Luft ermittelt werden, da es sich bei Staub ebenfalls lediglich um Partikel in der Luft handelt.

Darauf basierend kann zudem ein Alarm ausgelöst oder ein Signal an signaltechnisch verbundene Systeme übermittelt werden, durch welchem bzw. durch welches eine Konzentration übermittelt und falls erforderlich vor einer Ansteckungsgefahr gewarnt werden soll.

Wie einleitend beschrieben sind zwar grundsätzlich Verfahren und zugehörige Vorrichtungen bekannt, durch welche Viren bzw. Partikel in einer aus Luft entnommenen Probe feststellbar sind, diese sind jedoch meist nur unter Laborbedingungen und durch Fachpersonal durchführbar und nicht für eine fortlaufende Kontrolle und Überprüfung der Luft, insbesondere einer Raumluft, geeignet. Daher ist der grundlegende erfinderische Gedanke durch die Vorrichtung eine Möglichkeit bereitzustellen, mit welcher ein andauernder oder andauernder getakteter Probenstrom (Fluidstrom) fortlaufend analysiert werden kann, um die Konzentration der Viren (Partikel) in der (Raum-) Luft zu erfassen und zumindest anzuzeigen.

Eingangsseitig der Bereitstellungseinheit kann die Luft mit einem vorbestimmten Volumenstrom beispielsweise durch eine Saugvorrichtung und insbesondere einen Ventilator bzw. ein Gebläse angesaugt werden.

Um auf die Konzentration der vorbestimmten Partikel in der Luft rückschlie-ßen zu können, ist zudem vorzugsweise vorgesehen, dass die Bereitstellungseinheit ausgebildet ist, die in einem vorbestimmten Volumen der Luft enthaltenen Aerosolpartikel in einem vorbestimmten Volumen dem Fluid zu binden, so dass aus dem Anteil von vorbestimmten Partikeln in dem vorbestimmten Volumen des Fluiedes die Konzentration der vorbestimmten Partikel in dem vorbestimmten Volumen Luft bestimmbar ist. Es gilt also, dass vorzugsweise in einem definierten Luftvolumen enthaltende vorbestimmte Partikel nach dem Binden in dem Fluid in einem definierten und bekannten Fluidvolumen vorhanden sind.

Die vorbestimmten Partikel können jedoch in sehr niedriger Konzentration in dem Fluid vorliegen, so dass die Lösung aus Fluid und Partikel sehr "dünn" sein kann. Um die Konzentration in einem bestimmten Bereich der Probe, also in einem bestimmten Bereich des durch den Probenkanal strömenden Fluides, zu erhöhen und die Auswertung dadurch zu vereinfachen, kann ferner vorgesehen sein, dass das Fluid bzw. die Flüssigkeit eine Elektrolytlösung ist, also ein Elektrolyt enthält und die Bereitstellungseinheit und/oder die Abbildungseinheit eine ein elektrisches Feld erzeugende Isotachiophorese-Vorrichtung aufweist. Die Isotachiophorese-Vorrichtung ist ausgebildet, die in der Elektrolytlösung gebundenen Partikel durch ihre unterschiedliche lonenbeweglichkeiten abschnittsweise voneinander zu trennen, so dass das durch den Probenkanal strömende Fluid Flüssigkeit abschnittsweise Bereiche aufweist, in welchen Partikel mit gleicher Ionenbeweglichkeit konzentriert sind. Somit liegt in der Probe ein Bereich vor, in welchem die vorbestimmten Partikel in einer höheren Konzentration vorhanden sind, als in den umliegenden Bereichen des Fluides, und in welchem im Wesentlichen alle vorbestimmten Partikel der Probe vorhanden sind, da diese eine identische Ionenbeweglichkeit aufweisen. Vor und nach diesem Bereich existieren entsprechend weitere Bereiche, in welchen andere in der Probe enthaltenen Partikel mit anderen lonenbeweglichkeiten in erhöhter Konzentration vorliegen. Durch die Abbildungseinheit kann gezielt der Bereich der Probe mit der erhöhten Konzentration der vorbestimmten Partikel vergrößert oder die im Wesentlichen gesamte Probe vergrößert werden. Die Isotachiophorese-Vorrichtung kann hierfür zudem zwei Spannungsklemmen aufweisen, von welchen eine erste Klemme strömungstechnisch eingangsseitig der Abbildungseinheit und eine zweite Klemme strömungstechnisch ausgangsseitig der Abbildungseinheit angeordnet ist, durch welche das Fluid innerhalb des Probenkanals mit Spannung bzw. mit einem elektrischen Feld beaufschlagbar ist.

Um die Fluidströmung von der Bereitstellungseinheit durch den Probenkanal antreiben zu können, ist bei einer weiteren Ausführungsvariante vorgesehen, dass die Vorrichtung ferner eine Pumpe umfasst, welche ausgebildet ist, den Fluidstrom entlang des Strömungspfades anzutreiben und die Flüssigkeit bzw. das Fluid von der Bereitstellungseinheit mit einem vorzugsweise stetigen Volumenstrom oder in einem kontinuierlichem Takt getaktet durch die Abbildungseinheit hindurch zu pumpen bzw. zu fördern.

Zur Verbesserung der Sichtbarkeit der vorbestimmten Partikel bzw. aller Partikel in der Probe bzw. dem den Probenkanal durchströmenden Fluid ist zudem vorzugsweise vorgesehen, dass die Bereitstellungseinheit ausgebildet ist, dem Fluid und vorzugsweise der Flüssigkeit ein Kontrastmittel beizumischen, durch welches insbesondere eine Negativkontrastierung realisierbar ist, so dass die Partikel bzw. die Form und äußere Erscheinung der Partikel in der durch die Abbildungseinheit erzeugten Abbildung besser sichtbar bzw. erkennbar sind. Bei dem Kontrastmittel kann es sich insbesondere um Phosphorwolframsäure handeln.

Weiter vereinfacht werden kann die Analyse bzw. Auswertung der Probe dadurch, dass in dieser weniger Partikel vorhanden sind, welche ohnehin nicht erfasst werden sollen, welche also von dem vorbestimmten Partikel abweichen. Hierfür kann vorteilhaft vorgesehen sein, dass die Bereitstellungseinheit einen eingangsseitigen Vorfilter aufweist, welcher ausgebildet ist, eingangsseitig in die Bereitstellungseinheit einströmende Luft zu filtern, so dass in der Luft enthaltene organische und/oder anorganische Aerosolpartikel, bei welchen es sich nicht um die vorbestimmten Partikel handelt, zumindest teilweise vor dem Binden der Aerosolpartikel in dem Fluid ausgefiltert werden, so dass diese entsprechend nicht in dem Fluid vorhanden sind. Da die wichtigsten Typen von vorbestimmten Partikeln in ihrem Durchmesser kleiner als 300 nm sind, kommt als Vorfilter insbesondere eine Größenfilterung in Frage, durch welche im Wesentlichen alle Partikel herausgefiltert werden, welche einen Durchmesser größer als 300 nm aufweisen.

Der Vorfilter kann zudem mehrere Filter aufweisen, welche zudem auf unterschiedlichen Filterprinzipien beruhen können. Beispielsweise kann der Vorfilter einen Größen-Filter aufweisen, durch welchen vorzugsweise im Wesentlichen alle Aerosolpartikel, die einen Durchmesser größer dem Durchmesser der vorbestimmten Partikel aufweisen, ausgefiltert werden, so dass gefilterte Luft erhalten wird, welche entsprechend vorzugsweise nur Aerosolpartikel mit einem Durchmesser gleich und/oder kleiner dem Durchmesser der vorbestimmten Partikel enthält. Daraus ergibt sich, dass die Flüssigkeit bzw. das Fluid beim Binden der in der Luft enthaltenen Aerosolpartikel in der Flüssigkeit bzw. dem Fluid die zuvor in der gefilterten Luft enthaltenen Aerosolpartikel mit einem Durchmesser gleich oder kleiner dem Durchmesser des vorbestimmten Partikels als Partikel enthält.

Durch das Leiten der Luft in den Größen-Filter ergibt sich anschließend eine genauere Ermittlung der Konzentration, da in dem Fluid weniger "störende" Partikel vorhanden sind, durch welche die Messergebnisse verfälscht werden können. Ein solcher Größen-Filter kann zudem auch aus mehreren hintereinander angeordneten Filtern bestehen, so dass der Größen-Filter im Wesentlichen eine Filter-Anordnung sein kann, durch welche sukzessive Partikel mit einem Durchmesser größer dem Durchmesser der vorbestimmten Partikel gefiltert werden können, bevor die verbleibenden Partikel in dem Fluid gebunden werden.

Da in der Luft geladene und/oder ungeladene Partikel vorhanden sind, deren Konzentration abhängig von dem zu detektierenden Krankheitserreger (vorbestimmter Partikel bzw. Virus) vorzugsweise nicht ermittelt werden soll, sieht eine weitere vorteilhafte Variante vor, dass der Vorfilter einen Ladungs-Filter aufweist, durch welchen Aerosolpartikel, die eine positive Ladung aufweisen, und/oder Aerosolpartikel, die eine negative Ladung aufweisen, und/oder Aerosolpartikel, die ungeladen sind, aus der Luft gefiltert werden, so dass gefilterte Luft erhalten wird, welche vorzugsweise entsprechend nur Aerosolpartikel enthält, welche eine vorbestimmte Ladung aufweisen, die einer durch Ladung der vorbestimmten Partikel entspricht. Hierbei kann unter Ladung eine positive Ladung, eine negative Ladung sowie keine Ladung verstanden werden. Daraus folgt, dass das Fluid beim Binden der in der Luft enthaltenen Aerosolpartikel in dem Fluid im Wesentlichen nur die zuvor in der gefilterten Luft enthaltenen Aerosolpartikel mit einer vorbestimmten Ladung als Partikel enthält, was beispielsweise durch ein lineares Massenspektrometer mit Quadrupel Elektroden realisiert werden kann.

Zur Realisierung eines solchen Ladungs-Filters kann beispielsweise ein elektrisches Feld verwendet werden, durch welches die geladenen (Aerosol-) Partikel aus ihrer Bewegungsbahn ausgelenkt und somit aus dem Luftstrom entfernt werden. Ein derart realisierter Ladungs-Filter kann zudem mit einem oder mehreren Größen-Filtern kombiniert werden.

Weiter kann vorgesehen sein, dass der Vorfilter ein inhomogenes elektrisches Feld aufweist bzw. bereitstellt, durch welches polarisierbare Aerosolpartikel polarisiert werden. Ferner ist das inhomogene elektrische Feld bzw. eine dieses Feld erzeugende Vorrichtung ausgebildet, die polarisierten Aerosolpartikel durch den inhomogenen Verlauf des elektrischen Feldes auf eine Sammelvorrichtung zu lenken bzw. aus ihrer Bewegungsbahn auszulenken und an der Sammelvorrichtung zu sammeln. Die polarisierten Aerosolpartikel sammeln sich dementsprechend auf bzw. an der Sammelvorrichtung und werden an dieser oder ausgehend von dieser beim Binden der in der Luft enthaltenen Aerosolpartikel in dem Fluid gebunden.

Beispielsweise kann die Sammelvorrichtung der später erläuterte Kondensator der Bereitstellungseinheit und entsprechend temperiert sein, so dass die polarisierten Aerosolpartikel an der Sammelvorrichtung kondensieren. Das Leiten der Luft durch das inhomogene elektrische Feld, welches entsprechend im Wesentlichen ein Filtern und Sammeln der polarisierbaren Partikel aus der Luft darstellt, kann mit einem vorgeschaltetem Ladungs-Filter und einem oder mehreren vorgeschaltetem Größen-Filter kombiniert werden.

Sind die vorbestimmten Partikel nicht polarisierbar, weisen aber eine vorbekannte Ladung auf, kann die Sammelvorrichtung auch als entsprechend entgegengesetzt geladene Fläche ausgeführt sein, welche die vorbestimmten Partikel und der vorbekannten Ladung anzieht. Solche entsprechend entgegengesetzt geladenen und als Sammelvorrichtung vorgesehenen Flächen können ebenfalls beheizt sein.

Zum Binden der Partikel in dem Fluid ist vorzugsweise vorgesehen, dass die Bereitstellungseinheit einen Kondensator zum Binden der in der Luft enthaltenen Aerosolpartikel in dem Fluid bzw. der Flüssigkeit durch Kondensation aufweist. Die Luft mit den darin enthaltenen Partikeln kann also an dem Kondensator zu einem Kondensat (Kondenswasser) kondensieren und von diesem abgeführt werden. Hierfür kann der Kondensator zu einer Bildung von Kondenswasser führend temperiert und beispielsweise als Peltier-Element ausgeführt sein.

Besonders vorteilhaft kann die Abbildungseinheit ein Transmissionselektronenmikroskop (TEM) sein, welches eine einen Elektronenstrahl erzeugende Elektronenquelle, eine Vielzahl den Elektronenstrahl lenkende und als für den Elektronenstrahl als Linse wirkende Magnete und eine Vakuumkammer aufweist, welche von dem Elektronenstrahl durchlaufen wird. Zur Vergrößerung der in der Probe enthaltenen Partikel, durchläuft der Probenkanal vorzugsweise die Vakuumkammer orthogonal zu dem Elektronenstrahl bzw. zu einer Längsachse des Elektronenstrahls und der Elektronenstrahl verläuft durch den Probenkanal und das den Probenkanal insbesondere kontinuierlich durchströmende Fluid.

Wird ein TEM verwendet, sollte den Probenkanal für den durch das TEM erzeugte Elektronenstrahl transparent bzw. nahezu vollständig durchlässig sein, so dass eine vorteilhafte Variante vorsieht, dass der Probenkanal aus Siliziumnitrid oder einem anderen für den Elektronenstrahl bzw. für die Elektronen des Elektronenstrahls durchlässigen Material gebildet ist.

Darüber hinaus kann der Probenkanal aus einer, zwei oder mehr aneinander anliegenden und zwischen sich einen Kanal bildenden Membran(en) bestehen.

Weiter ist der Probenkanal vorzugsweise bezüglich seiner Dicke parallel zu dem Elektronenstrahl so gewählt, dass eine möglichst genaue und scharfe Abbildung bzw. Vergrößerung durch das TEM erzeugt werden kann.

Gegenüber einem herkömmlichen TEM kann das vorliegend vorgeschlagene TEM vorteilhaft dahingehend ausgestaltet sein, dass es speziell für die Vergrößerung einer ständig wechselnden aber gleichartigen Probe an einer vorbekannten und unveränderlichen Position ausgebildet ist, für deren Wechsel jedoch kein Austausch eines Probenträgers oder dergleichen notwendig ist. Somit muss das gemäß der vorteilhaften Variante vorgeschlagene TEM nicht wesentlich fokussier- oder allgemein einstellbar ausgebildet sein und auch keinen Wechsel eines Objektträgers für die Proben berücksichtigen bzw. ermöglichen. Entsprechend ist weiter vorzugsweise vorgesehen, dass die Magnete als Permanentmagnete ausgebildet oder als Elektromagnete ausgebildet und mit einer konstanten bzw. unveränderlichen Spannung versorgt sind, so dass der Elektronenstrahl von den Magneten in einer einzigen vorbestimmten Weise gelenkt und auf das den Probenkanal durchströmende Fluid fokussiert ist. Alternativ können die Magneten auch in Form von Spulen vorgesehen sein. Ferner sind diese insbesondere als Ringmagnete um die Vakuumkammer angeordnet. Sind Elektromagnete mit einer konstanten Spannung vorgesehen, kann auf eine aufwändige Spannungsregelung und eine zugehörige Steuerung verzichtet werden. Zudem umfasst ein TEM meist mehrere Magnete bzw. durch diese gebildete Magnetsysteme, so dass beispielsweise abhängig von dem benötigten Magnetfeld erste Magnete des TEM als Permanentmagnete und zweite Magnete des TEM als mit einer konstanten Spannung versorgte Elektromagnete ausgeführt sein können. Sofern das TEM eine Apertur umfasst, kann auch diese unveränderlich bzw. fixiert ausgeführt sein. Auch die Elektronenquelle kann ausgebildet sein, einen unveränderlichen bzw. fest eingestellten Elektronenstrahl mit gleichbleibend vorbestimmten Eigenschaften zu erzeugen.

Wie beschrieben ist das vorgeschlagene TEM vorzugsweise nicht wesentlich einstellbar. Es kann jedoch vorgesehen sein, dass das TEM bzw. die einzelnen Komponenten des TEM in einem eng eingegrenzten und vorbestimmten Bereich einstellbar sind, um einen Feinabgleich, eine Scharfstellung der erzeugte Abbildung und den Ausgleich von Alterungserscheinungen zu ermöglichen. Hierfür können beispielsweise die Magnete auswechselbar sein oder eine eventuell vorhandene Apertur sehr begrenzt einstellbar sein.

Zudem kann der Probenkanal dauerhaft und bezogen auf die Vakuumkammer insbesondere ortsfest mit der Vakuumkammer verbunden sein. Vorteilhaft ist zudem eine einteilige Ausführung von Vakuumkammer und Probenkanal miteinander, bei welcher diese untrennbar verbunden sind.

Weiter muss die Vakuumkammer des TEM bei dieser speziellen Variante nicht dafür ausgelegt werden, immer wieder ein hohes Vakuum aufzubauen. Daher kann die Vakuumkammer vollständig druckdicht abgeschlossen und ferner ausgebildet sein, ein in ihr herrschendes Vakuum dauerhaft zu erhalten, so dass eine das Vakuum bestimmende Druckminderung nur einmalig durchgeführt werden muss und anschließend dauerhaft, also vorzugsweise über die gesamte Lebensdauer der Vorrichtung, erhalten bleibt.

Zur Erfassung und insbesondere Digitalisierung der erzeugten Abbildung, ist die Bilderfassungseinheit vorzugsweise ein CCD-Sensor oder eine Kamera. Die Kamera bzw. der CCD-Sensor ist ausgebildet, die von der Abbildungseinheit erzeugte Abbildung zu erfassen.

Weiter kann die Bilderfassungseinheit das so erfasste Bild elektronisch bzw. signaltechnisch an die Auswerteeinheit übermitteln. Hierbei kann sowohl ein Standbild als auch ein Bewegtbild, wie ein fortlaufendes Videosignal, an die Auswerteeinheit übermittelt werden.

Zur Analyse bzw. Auswertung des übermittelten Bildes, weist die Auswerteeinheit gemäß einer vorteilhaften Ausgestaltung einen Datenspeicher auf, in welchem die morphologischen Eigenschaften und insbesondere ein Aussehen der vorbestimmten Partikel, beispielsweise durch einen Algorithmus, tabellarisch oder als Vergleichsbild, gespeichert sind. Zudem ist die Auswerteeinheit ausgebildet, durch Bildverarbeitung und Objekterkennung sowie beispielsweise durch neuronale Netzte bzw. eine künstliche Intelligenz zu ermitteln, wie viele der in der Abbildung abgebildeten Partikel morphologische Eigenschaften und insbesondere ein Aussehen entsprechend der morphologischen Eigenschaften und insbesondere dem Aussehen der vorbestimmten Partikel aufweisen und somit vorbestimmte Partikel sind. Wurde so die Anzahl der Partikel in der Probe ermittelt, bei welchen es sich um die vorbestimmten Partikel handelt, kann über die Anzahl deren Anteil bzw. deren Anzahl in der Probe bzw. in der Luft bestimmt werden.

Ein weiterer Aspekt der Erfindung betrifft ein Verfahren zur Erfassung einer Konzentration von vorbestimmten Partikeln, insbesondere Viren, in Luft, welche organische und/oder anorganische Aerosolpartikel umfasst, mit einer erfindungsgemäßen Vorrichtung. Dabei ist vorgesehen, dass die in der Luft enthaltenen Aerosolpartikel mit der Bereitstellungseinheit in einem Fluid gebunden werden, so dass das Fluid die zuvor in der Luft enthaltenen Aerosolpartikel als Partikel enthält, und dass anschließend ein stetiger oder gleichmäßig getakteter Fluidstrom entlang eines vorbestimmten Strömungspfades bereit gestellt wird. Anschließend wird mittels der Abbildungseinheit eine vergrößerte Abbildung der Partikel erzeugt, welche in dem den Probenkanal durchströmenden Fluid enthalten sind. Die so erzeugte Abbildung wird mit der Bilderfassungseinheit erfasst und an die Auswerteeinheit übermittelt. Die Auswerteeinheit erfasst automatisch morphologische Eigenschaften der in der Abbildung abgebildeten Partikel, wobei anschließend die erfassten morphologischen Eigenschaften mit morphologischen Eigenschaften der vorbestimmten Partikel verglichen werden. Durch den Vergleich werden ein Anteil von vorbestimmten Partikeln in der Abbildung und die Konzentration der vorbestimmten Partikel in der Luft bestimmt. Unter dem Erfassen der morphologischen Eigenschaften der Partikel und dem Anschließendem Vergleich wird insbesondere auch ein Vergleich der durch die Abbildungs- einheit erzeugten Abbildung bzw. den Abbildungen der darauf gezeigten Partikel mit Vergleichsbildern der vorbestimmten Partikel verstanden.

Zudem betrifft ein weiterer Aspekt der Erfindung ein System zur Ermittlung einer Bewegung und Konzentration von vorbestimmten Partikeln in einem Raum im Sinne eines Zimmers. Das System umfasst eine zentrale Auswerteeinheit und eine Vielzahl von erfindungsgemäßen Vorrichtungen. Die Vorrichtungen sind nach einem vorbestimmten Muster und insbesondere gemäß einem vorbestimmten Raster in dem Raum verteilt. Die zentrale Auswerteeinheit, welche auch die Auswerteeinheit der Vorrichtungen umfassen oder integral ausbilden kann, ist ausgebildet, aus den von den Vorrichtungen jeweils ermittelten Konzentrationen eine Konzentration der Partikel in dem Raum und/oder eine Verteilung der vorbestimmten Partikel in dem Raum und/oder eine Bewegung der vorbestimmten Partikel in dem Raum zu ermitteln und/oder vorherzusagen. Hierfür können die Konzentrationen auch über einen längeren Zeitraum ermittelt und beobachtet bzw. analysiert werden. Für die Bestimmung der Konzentrationen der Bewegungen und des zu erwartenden, also zukünftigen Verhaltens können auch insbesondere neuronale Netze, künstliche Intelligenz oder eine Extrapolation verwendet werden.

Als die Bewegung der vorbestimmten Partikel kann nicht nur die makroskopische Bewegung in einem Raum, sondern bei geeigneter Anordnung der Vorrichtungen eine Brownsche Molekularbewegung der Partikel erfasst werden.

Neben einem Alarm, welcher bei einem Überschreiten der Konzentration über einen Grenzwert ausgelöst werden kann, kann zudem auch ein Alarm oder Signal erzeugt werden, wenn sich die vorbestimmten Partikel im Raum, also die Aerosolwolke in eine bestimmte Richtung oder zu einer bestimmten Position bewegt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

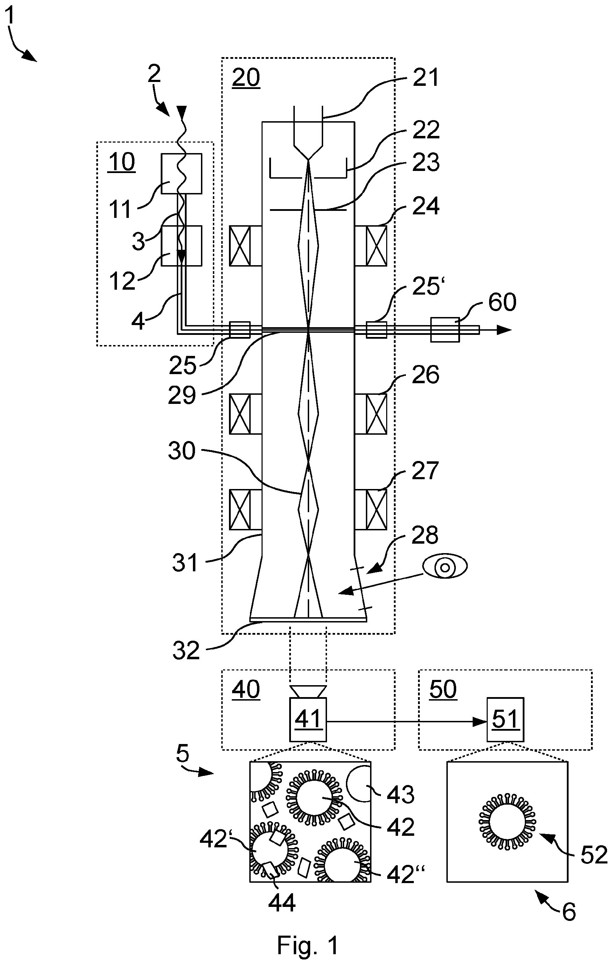

Fig. 1 Vorrichtung mit einem TEM als Abbildungseinheit.

Die Figur ist beispielhaft schematisch und zeigt eine Vorrichtung 1, welche ein Transmissionselektronenmikroskop (TEM) als Abbildungseinheit 20 nutzt.

Das Grundprinzip der Vorrichtung 1 besteht darin, Luft 3 und beispielsweise Raumluft an einem Lufteinlass 2 anzusaugen bzw. aufzunehmen, die in der Luft 3 enthaltenen Partikel in der Bereitstellungseinheit 10 in einer Flüssigkeit 4 als Fluid zu binden und einen ständigen Flüssigkeits- bzw. Fluidstrom durch die Abbildungseinheit 20 bereitzustellen, so dass hierdurch eine "In-situ-Analyse" der in der Flüssigkeit 4 gebundenen Partikel ermöglicht wird, bei welcher sich also die zu analysierende Probe, bei welcher es sich um die Flüssigkeit 4 bzw. genauer die durch die Abbildungseinheit 20 strömende Flüssigkeit 4 handelt, ständig verändert. Zusammen mit der Flüssigkeit 4 wird also ein ständiger Strom von Partikeln durch das TEM bzw. durch die Abbildungseinheit 20 bereitgestellt, durch welche die Partikel vergrößert abgebildet werden, so dass die in der Probe bzw. in der Flüssigkeit 4 enthaltenen Partikel anschließend analysiert werden können.

Vorliegend weist die Bereitstellungseinheit 10 einen Vorfilter 11 auf, durch welchen Partikel aus der Luft 3 gefiltert werden, bei welchen es sich bereits aufgrund ihrer Größe, Ladung oder anderer Faktoren nicht um die vorbestimmten Partikel handeln kann. Der Vorfilter 11 kann hierfür mehrere Filterstufen aufweisen und verschiedene Filterprinzipien anwenden.

Die durch den Vorfilter 11 gefilterte Luft 3 wird anschließend durch einen Kondensator 12 kondensiert, so dass sich ein Kondensat als Flüssigkeit 4 bildet, in welcher die zuvor in der gefilterten Luft 3 enthaltenen Partikel gebunden sind.

Das Kondensat bzw. die Flüssigkeit 4 wird anschließend entlang eines vorbestimmten Strömungspfades aus der Bereitstellungseinheit 10 in bzw. durch die Abbildungseinheit 20 gepumpt, wobei hierfür eine ausgangsseitig der Abbildungseinheit 20 angeordnete Pumpe 60 verwendet wird.

In der Flüssigkeit 4 sind die vorbestimmten Partikel sowie alle darin enthaltenen Partikel zunächst relativ gleichmäßig verteilt, so dass die gesuchten bzw. vorbestimmten Partikel, deren Konzentration in der Luft ermittelt werden soll, über einen Bereich der Flüssigkeit 4 gleichmäßig verteilt und schlecht bzw. aufwändig auffindbar sind. Zur Verbesserung und Vereinfachung der Analyse weist die Abbildungseinheit 20 eine Isotachiophorese-Vorrichtung mit einer ersten Spannungsklemme 25 und einer zweiten Spannungsklemme 25' auf. Die erste Spannungsklemme 25 ist strömungstechnisch eingangsseitig der Abbildungseinheit 20 bzw. des Probenkanals 29 und die zweite Spannungsklemme 25' ist strömungstechnisch ausgangsseitig der Abbildungseinheit 20 bzw. des Probenkanals 29 angeordnet, wobei diese ein elektrisches Feld in dem Probenkanal 29 aufbauen, so dass sich in der den Probenkanal 29 durchströmenden Flüssigkeit 4 mehrere Bereiche ausbilden, welche jeweils Partikel mit gleicher bzw. annähernd gleicher Ionenbeweglichkeit aufweisen. In einem dieser Bereiche liegen somit im Wesentlichen alle Partikel mit einer Ionenbeweglichkeit gleich der Ionenbeweglichkeit der vorbestimmten Partikel und mithin im Wesentlichen alle vorbestimmten Partikel vor, so dass es ausreichend ist, nur diesen Bereich mit der Abbildungseinheit 20 abzubilden, mit der Bilderfassungseinheit 40 zu erfassen oder mit der Auswerteeinheit 50 auszuwerten.

Die vorliegend als TEM realisierte Abbildungseinheit 20 muss nicht für verschiedene Messverfahren oder einen Austausch von Probenträgern oder dergleichen ausgebildet sein, so dass das TEM auf die vorliegende Anwendung spezialisiert ist. Hierfür weist das TEM eine vollständig und dauerhafte abgedichtete Vakuumkammer 31 auf, in welcher einmalig ein Vakuum (Hochvakuum) erzeugt wurde und dauerhaft erhalten bleibt. In die Vakuumkammer, welche auch als Messsäule bezeichnet werden kann, wird durch eine Elektronenquelle 21 ein Elektronenstrahl 30 emittiert, welcher die Vakuumkammer 31 der Länge nach durchläuft. Der Elektronenstrahl 30 wird durch ein Wehnelt Zylinder 22 unveränderlich in seiner Strahlstärke eingestellt und durch eine fest eingestellte und nicht verstellbare Apertur 23 sowie mehrere Magneten 24, 26, 27 auf den Probenkanal 29 und den Leuchtschirm 32 gelenkt bzw. fokussiert. Ein erster Magnet 24 bzw. ein erstes Magnetsystem, welches auch aus mehreren Magneten bestehen kann, dient als Kondensatormagnetsystem, ein zweiter Magnet 26 bzw. ein zweites Magnetsystem, dient als Objektmagnetsystem und ein dritter Magnet 27 bzw. ein drittes Magnetsystem, dient als Projektionsmagnetsystem, wobei diese vorliegend jeweils als Permanentmagnete und somit unveränderlich ausgebildet sind.

Die durch den Probenkanal 29 fließende Flüssigkeit 4 wird von dem Elektronenstrahl 30 somit stets in einer einzigen vorbestimmten Weise getroffen und eine Abbildung der in der Flüssigkeit 4 vorhandenen Partikel auf den Leuchtschirm 32 projiziert, so dass dort eine analoge Abbildung sichtbar ist, welche auch durch das Kontrollfenster 28 betrachtet werden kann.

Die auf den Leuchtschirm 32 geworfene Abbildung wird durch die Bilderfassungseinheit 40, welche vorliegend im Wesentlichen durch eine Kamera 41 gebildet wird, erfasst und die Abbildung dadurch digitalisiert und anschließend an die Auswerteeinheit 50 übermittelt.

Beispielhaft ist ein Ausschnitt 5 einer durch die Kamera 41 erfassten Abbildung dargestellt, in welchem eine Vielzahl von Partikeln sichtbar ist. Insbesondere sind dort beispielhaft vier vorbestimmte Partikel 42, 42', 42" dargestellt, welche nur teilweise oder verdeckt sichtbar sind. Diese können auch von anderen Partikeln 43, 44 überlagert werden. Weiter ist die äußere Erscheinung 52 eines vorbestimmten Partikels in der Auswerteeinheit 50 bzw. dessen Datenspeicher 51 als ein Vergleichsbild 6 bzw. als morphologische Eigenschaft der vorbestimmten Partikel hinterlegt. Mithilfe von Bildverarbeitung werden nun die Partikel in dem Ausschnitt 5 der Abbildung mit der äußeren Erscheinung 52 des Zielpartikels bzw. des vorbestimmten Partikels verglichen. Bei ausreichend hoher Übereinstimmung mit dem Vergleichsbild 6 wird der jeweils analysierte Partikel in dem Ausschnitt 5 als vorbestimmter Partikel erkannt und gezählt. Die vorbestimmten Partikel bzw. Viren lassen sich also von anderen Partikeln durch ihre äußere Erscheinung bzw. durch ihre äußere Form unterscheiden. Beispielsweise besitzt der Partikel 43 zwar eine annähernd gleiche Größe, so dass er bei einer Bestimmung anhand der Größe falsch als Virus bzw. vorbestimmter Partikel erkannt werden würde, jedoch eine vollständig abweichende Kontur bzw. Oberflächenform, so dass er mit der vorliegend vorgeschlagenen Vorrichtung korrekt als kein vorbestimmter Partikel bzw. Virus klassifiziert werden kann.

## Patentansprüche

1. Vorrichtung (1) zur Erfassung einer Konzentration von vorbestimmten Partikeln, insbesondere Viren, in Luft (3), welche organische und/oder anorganische Aerosolpartikel umfasst,
wobei die Vorrichtung (1) eine Bereitstellungseinheit (10), eine Abbildungseinheit (20), eine Bilderfassungseinheit (40) und eine Auswerteeinheit (50) aufweist,
wobei die Bereitstellungseinheit (10) ausgebildet ist, die in der Luft (3) enthaltenen Aerosolpartikel in einem Fluid (4) zu binden, so dass das Fluid (4) die zuvor in der Luft (3) enthaltenen Aerosolpartikel als Partikel enthält, und einen stetigen oder gleichmäßig getakteten Fluidstrom entlang eines vorbestimmten Strömungspfades bereitzustellen,
wobei die Abbildungseinheit (20) einen von dem Fluidstrom durchströmbaren Probenkanal (29) aufweist, welcher den vorbestimmten Strömungspfad innerhalb der Abbildungseinheit (20) bestimmt, und wobei die Abbildungseinheit (20) ausgebildet ist, eine vergrößerte Abbildung der Partikel zu erzeugen, welche in der den Probenkanal (29) durchströmenden Fluid (4) enthalten sind,
wobei die Bilderfassungseinheit (40) ausgebildet ist, die Abbildung zu erfassen und an die Auswerteeinheit (50) zu übermitteln,
wobei die Auswerteeinheit (50) ausgebildet ist, automatisch morphologische Eigenschaften der in der Abbildung abgebildeten Partikel zu erfassen, die erfassten morphologischen Eigenschaften mit morphologischen Eigenschaften der vorbestimmten Partikel zu vergleichen und durch den Vergleich einen Anteil von vorbestimmten Partikeln in der Abbildung und die Konzentration der vorbestimmten Partikel in der Luft (3) zu bestimmen.

2. Vorrichtung nach Anspruch 1,
wobei die Bereitstellungseinheit (10) ausgebildet ist, die in einem vorbestimmten Volumen der Luft (3) enthaltenen Aerosolpartikel in einem vorbestimmten Volumen des Fluides (4) zu binden, so dass aus dem Anteil von vorbestimmten Partikeln in dem vorbestimmten Volumen des Fluides (4) die Konzentration der vorbestimmten Partikel in dem vorbestimmten Volumen Luft (3) bestimmbar ist.

3. Vorrichtung nach Anspruch 1 oder 2,
wobei das Fluid (4) eine Elektrolytlösung ist und
wobei die Bereitstellungseinheit (10) und/oder die Abbildungs- einheit (20) eine ein elektrisches Feld erzeugende Isotachiophorese-Vorrichtung aufweist, welche ausgebildet ist, die in der Elektrolytlösung gebundenen Partikel durch ihre unterschiedliche lonenbeweglichkeiten abschnittsweise voneinander zu trennen, so dass das durch den Probenkanal (29) strömende Fluid (4) abschnittsweise Bereiche aufweist, in welchen Partikel mit gleicher Ionenbeweglichkeit konzentriert sind.

4. Vorrichtung nach einem der vorhergehenden Ansprüche,
ferner umfassend eine Pumpe (60), welche ausgebildet ist, den Fluidstrom entlang des Strömungspfades anzutreiben und das Fluid (4) von der Bereitstellungseinheit (10) mit einem vorzugsweise stetigen Volumenstrom oder in einem kontinuierlichem Takt getaktet durch die Abbildungseinheit (20) hindurch zu pumpen.

5. Vorrichtung nach einem der vorhergehenden Ansprüche,
wobei die Bereitstellungseinheit (10) ausgebildet ist, dem Fluid (4) ein Kontrastmittel beizumischen.

6. Vorrichtung nach einem der vorhergehenden Ansprüche,
wobei die Bereitstellungseinheit (10) einen eingangsseitigen Vorfilter (11) aufweist, welcher ausgebildet ist, eingangsseitig in die Bereitstellungseinheit (10) einströmende Luft (3) zu filtern, so dass in der Luft (3) enthaltene organische und/oder anorganische Aerosolpartikel, bei welchen es sich nicht um die vorbestimmten Partikel handelt, vor dem Binden der Aerosolpartikel in dem Fluid (4) ausgefiltert werden.

7. Vorrichtung nach einem der vorhergehenden Ansprüche,
wobei die Bereitstellungseinheit (20) einen Kondensator (12) zum Binden der in der Luft (3) enthaltenen Aerosolpartikel in dem Fluid (4) durch Kondensation aufweist.

8. Vorrichtung nach einem der vorhergehenden Ansprüche,
wobei die Abbildungseinheit (20) ein Transmissionselektronenmikroskop ist, welches eine einen Elektronenstrahl (30) erzeugende Elektronenquelle (21), eine Vielzahl den Elektronenstrahl (30) lenkende und als für den Elektronenstrahl (30) als Linse wirkende Magnete (24, 26, 27) und eine Vakuumkammer (31) aufweist, welche von dem Elektronenstrahl (30) durchlaufen wird,
wobei der Probenkanal (29) die Vakuumkammer (31) insbesondere orthogonal zu dem Elektronenstrahl (30) durchläuft und der Elektronenstrahl (30) durch den Probenkanal (29) und das den Probenkanal (29) durchströmende Fluid (4) verläuft.

9. Vorrichtung nach dem vorhergehenden Anspruch,
wobei der Probenkanal (29) aus Siliziumnitrid oder einem anderen für den Elektronenstrahl (30) durchlässigen Material gebildet ist.

10. Vorrichtdung nach einem der Ansprüche 8 oder9,
wobei die Magnete (24, 26, 27) als Permanentmagnete ausgebildet oder als Elektromagnete ausgebildet und mit einer konstanten Spannung versorgt sind, so dass der Elektronenstrahl (30) von den Magneten (24, 26, 27) in einer einzigen vorbestimmten Weise gelenkt und auf das den Probenkanal (29) durchströmende Fluid (4) fokussiert ist,
und/oder wobei der Probenkanal (29) dauerhaft mit der Vakuumkammer (31) verbunden ist,
und/oder wobei die Vakuumkammer (31) vollständig druckdicht abgeschlossen und ausgebildet ist, ein in ihr herrschendes Vakuum dauerhaft zu erhalten, so dass eine das Vakuum bestimmende Druckminderung nur einmalig durchgeführt werden muss.

11. Vorrichtung nach einem der vorhergehenden Ansprüche,
wobei die Bilderfassungseinheit (40) ein CCD-Sensor oder eine Kamera (41) ist, welche/r ausgebildet ist, die von der Abbildungseinheit (20) erzeugte Abbildung zu erfassen.

12. Vorrichtung nach einem der vorhergehenden Ansprüche,
wobei die Auswerteeinheit (50) einen Datenspeicher (51) aufweist, in welchem die morphologischen Eigenschaften und insbesondere ein Aussehen der vorbestimmten Partikel gespeichert sind, und die Auswerteeinheit (50) ausgebildet ist, durch Bildverarbeitung und Objekterkennung zu ermitteln, wie viele der in der Abbildung abgebildeten Partikel morphologische Eigenschaften und insbesondere ein Aussehen entsprechend der morphologischen Eigenschaften und insbesondere dem Aussehen der vorbestimmten Partikel aufweisen und somit vorbestimmte Partikel sind.

13. Verfahren zur Erfassung einer Konzentration von vorbestimmten Partikeln, insbesondere Viren, in Luft, welche organische und/oder anorganische Aerosolpartikel umfasst, mit einer Vorrichtung (1) gemäß einem der vorhergehenden Ansprüche.

14. System zur Ermittlung einer Bewegung und Konzentration von vorbestimmten Partikeln in einem Raum umfassend eine zentrale Auswerteeinheit und eine Vielzahl von Vorrichtungen (1) gemäß einem der Ansprüche 1 bis 12,
wobei die Vorrichtungen (1) nach einem vorbestimmten Muster und insbesondere gemäß einem vorbestimmten Raster in dem Raum verteilt sind,
wobei die zentrale Auswerteeinheit ausgebildet ist, aus den von den Vorrichtungen (1) jeweils ermittelten Konzentrationen eine Konzentration der Partikel in dem Raum und/oder eine Verteilung der vorbestimmten Partikel in dem Raum und/oder eine Bewegung der vorbestimmten Partikel in dem Raum zu ermitteln und/oder vorherzusagen.
